# EUROPEAN PATENT SPECIFICATION

(11) **EP 0 098 753 B1**
(45) Date of publication and mention of the grant of the patent: **11.03.1987**
(21) Application number: 83303884.7
(22) Date of filing: 04.07.1983
(51) Int. Cl.: A23K 1/00, C05F 3/00

(54) **Process of utilising animal and vegetable waste**
Verfahren zur Verwertung tierischer und pflanzlicher Abfallstoffe
Procédé pour l'utilisation de déchets animaux et végétaux

(30) Priority: 02.07.1982 GB 8219213; 15.03.1983 GB 8307046
(43) Date of publication of application: 18.01.1984
(73) Proprietor: NATIONAL RESEARCH DEVELOPMENT CORPORATION, London SE1 6BU (GB)
(72) Inventor: Edwards, Clive Arthur, Harpenden Hertfordshire (GB)
(74) Representative: Percy, Richard Keith

## Description

This invention relates to a process of utilizing animal waste, especially pig and cattle wastes, or vegetable waste solids, especially potato peelings. The term "animal wastes" used herein means waste comprising predominantly animal dung, urine, and water, as distinct from slaughterhouse or butchery waste comprising inedible parts of animal carcase.

The very large amounts of animal wastes generated by farm animals constitute a double problem. Firstly, they must be disposed of without causing pollution, secondly considerable amounts of energy-rich resources are lost during their disposal. Moreover, many such wastes have very noxious odours and decompose only slowly.

Traditionally, most pigs and cattle were loose housed on a deep layer of straw during the winter. The straw served to absorb dung and urine so that a solid farmyard manure could be forked out of the buildings, stacked and eventually spread on the land. Today about 50% of animals in the UK are kept in buildings using minimal amounts of straw, sawdust or sand for bedding. Dung and urine are handled as a semi-liquid slurry, often made more liquid by washing out the houses. This can be handled more easily but creates disposal problems.

84 million tonnes of cattle waste and more than 9 million tonnes of pig waste were produced in the UK in 1980. Most of these are currently disposed of on the land, mainly in the form of slurries. As these slurries are normally too viscous to be pumped, disposal is very labour-intensive. More recently a process of mechanical separation of slurry into a "solids" component with 18-22% dry matter and a liquid component with about 8% dry matter has been developed. This improves the uptake of nitrogen by plants when the solids are spread on the land and the liquid fraction can be readily sprayed on to land. Various commercial types of separator have been developed for this purpose. It has been estimated that only 50% of animal wastes are applied to land with regard to their value as a fertilizer. Thus, more than 50% of this valuable material is at present wasted.

It has now been found that the separated animal waste solids, especially from pigs and cattle, are an ideal medium for growing worms and they process the waste into a valuable agricultural material useful as a plant food, soil conditioner or a plant growing substrate. Since the product has little odour and an appealing peat-like texture it is readily saleable.

The very large amounts of organic wastes generated by the food industry constitute a double problem. Firstly, they must be disposed of without causing pollution; secondly considerable amounts of energy-rich resources are lost during their disposal. Moreover, many such wastes have highly noxious odours and do not decompose readily.

A typical waste of this kind is that produced by the processed potato industry. The proportion of potato peelings generated by mechanical peeling devices is high, typically 15-20%. These peelings are malodorous and do not decompose readily. The solids can be sold as pig food at about £1-per tonne, but the cost of transport is prohibitive if pig farms are not close to the processing factory. Potato production in the UK has been increasing annually, so that the waste disposal problem is likely to increase in the 1980's.

It has now also been found that solid vegetable wastes from peelings, especially potato wastes, can be processed by earthworms into a valuable agricultural material useful as a plant food or soil conditioner. This also is a product of low odour with an appealing peat-like texture, which can be sold.

These processes are therefore a valuable'way of utilizing the wastes, turning them from being a largely unwanted and expensive nuisance into a useful commercial product and solving a vexing problem of waste disposal.

The worms are composed of 60-70% protein, 8-20% carbohydrate, 7-10% fat and 2-3% minerals and are rich in vitamins. The worms bred in this material are therefore a valuable protein feed additive for fish-farming, or for pigs or poultry and they can be separated from the worked waste and sold for this purpose, thus giving a second useful saleable material from the wastes.

The invention accordingly provides a process of decomposing a waste consisting of, or including a major proportion of, separated animal waste solids or of vegetable peelings waste solids, the separated animal waste solids being obtained by separation of a solids fraction from animal waste slurry, the waste to be decomposed having a pH of between 5 and 9, any ammonia content less than 0.5 mg/g and a water content from 65 to 90% by weight which process comprises introducing earthworms or earthworm cocoons, preferably of the species E. foetida, D. veneta, E. eugeniae or P. excavatus, into the waste and- allowing the worms to mature and breed therein at a temperature of from 15 to 30°C and break down the waste into a product of peat-like appearance. Optionally, most or substantially all the worms are separated from the peat-like material. They can then be killed and processed for use as a feedstuff (see later).

It should be made clear that, although the product could be said to have some of the appearance of a potting compost, the process of the invention is not one of composting. In composting, the starting waste is predominantly anaerobic and becomes aerobic only slowly. The unseparated animal waste slurry as produced is anaerobic but, after the separation process, the solids fraction becomes rapidly aerobic and acceptable to the worms and, once established the worms accelerate this process, by making air passages in the material and passing it through their intestines which increases the activity of aerobic microorganisms. The breeding of worms in waste has previously involved mixing the waste, usually sewage sludge or horse manure, with a bulking medium such as straw or wood shavings and letting this become aerobic by composting. Here it is the practice of separating solids from liquids that makes the waste acceptable to the worms. It is also distinct from ordinary garden composting, normally practised in heaps and using dead plants, grass and household organic wastes.

The pig and cattle solids separation process produces a medium (78-82% by weight water, 18-22% by weight solids) which resembles that of worms (20-25% by weight solids) in terms of moisture content and thus places no osmotic or other stress on the worms, which probably accounts to a considerable extent for the success of the invention. The separated solids make an open medium that becomes aerobic rapidly with a minimum of composting necessary. Although the worms tolerate a wide range of moisture content in the waste, normally 50-90% by weight, they grow much faster and process organic waste much better at a moisture content in the waste of 65-90% by weight, the exact optimum range depending on the species of worm.

The vegetable waste starting material is also solid, in the sense that it is capable of being handled as a solid. The potato processing industry also creates a liquid sludge containing only about 2-8% by weight of solids. This is not suitable for treatment in this invention as the water content is too high to create the areobic conditions necessary, and for the worms to breed optimally. The peelings produced have a water content of around 77% by weight, which does not normally vary by more than 1 or 2%. Again this particular water content (say 75-79% by weight) is very similar to the water content of most earthworms and it is quite possibly this factor which makes the peelings waste so outstandingly suitable for use, without pre-treatment, in the process of the invention. By contrast, many other wastes require a pre-treatment for vermicomposting. The water content should not normally exceed 90% and preferably not exceed 88% by weight. A range from 65 to 90% is preferred, the exact optimum range again depending on the species of worm.

Worms can be grown satisfactorily in either kind of waste in boxes or crates lined with polythene with no additions of water from the beginning to the end of the process. By contrast worms grown in beds containing vegetable peelings waste to which bulk material such as wood shavings or straw are added need continual addition of moisture to maintain correct environmental conditions. No treatment of the separated solids is necessary to make them a suitable worm growing medium.

In the case of the animal waste solids, part or all of the liquid fraction can be added back progressively to the separated solids during the processing of the waste, so utilizing the solid content of the liquid fraction as food for the microorganisms upon which the worms feed.

Other factors have been determined as important to maximum growth of worms and processing of wastes. One factor is that the pH must be between 5 and 9. All separated cattle and pig solids seem to have a pH lying within these limits. There must be a low ammonia content, normally of less than 0.5 mg/g. Most separated cattle solids have less ammonia than this and, although separated pig solids sometimes have a higher ammonia content, this usually disappears from the solids quite rapidly within a few days, e.g. by leaching or by microbial breakdown, and causes no serious problem for worm growing. The worms prefer a salt content of less than 0.5% for optimum growth and activity. This is usually achieved in separated cattle solids and although sometimes exceeded in separated pig solids, rapidly falls to an acceptable level through leaching.

The starting vegetable waste also complies with the above pH requirements and normally complies with the above preferences as to other parameters. It will frequently be processed as a mainly vegetable waste, especially potato waste, but it can also contain any additions which do not destroy its aerobic character. Thus minor proportions of other wastes, e.g. poultry and cattle waste, can be included. Residues from mushroom compost can be added. Small quantities of soil, straw or other farm wastes can be introduced. Of course, mixtures of the vegetable waste and the separated animal solids wastes can be processed by the invention.

While the invention is described herein by reference to potato waste it will be appreciated that similar treatments apply, mutatis mutandis, to onions, carrots and other peelable vegetables.

The peat-like product obtained by the process of the invention has a much finer and improved structure after working by worms than the unworked waste, and improved water-holding capacity, namely about 70%, which is similar to that of peat and more available mineral nutrient. The peat-like product can be mixed with other plant growth media, for example peat or compost, in any appropriate proportions. It can replace part or all of a conventional potting compost. Pig waste is richer in nitrogen, potassium and other nutrients than cattle waste.

The process of the invention is of interest primarily for disposal of unpleasant and inconvenient wastes but it can also be used to produce worms as a source of protein for animal feed. For this purpose most of the worms are separated from the peat-like product. This can be done conveniently by sieving, whereby most of the worms are retained on the sieve, while the product, worm cocoons and very small worms fall through. One convenient device for this is a special cylindrical rotating sieve. The treated waste passes down through the rotating cylinder which has graded mesh sizes, the peat-like product falls through the sieves and the worms are collected at the bell-like open downstream end. They separate readily into a distinct pile where they can be cleaned by standing for 3 hours in water and blanched for 5 minutes in boiling water. They can then be processed for feed by ensiling in 3% formic acid or heat-drying at about 80°C. The invention includes both the peat-like products for horticulture and the harvested worms.

The small worms and cocoons are normally retained to inoculate the next batch of waste. Of course it is desirable not to extract all worms from the waste or the supply for reinoculation would be inadequate. When the harvesting of worms is not of interest, it is not necessary to separate the worms from the waste but it might be necessary to raise the temperature of the waste to above 50°C, say for a few hours, to kill unwanted worms and cocoons before horticultural use. If this is not done all worms will die eventually through having exhausted the waste of nutrients. It will be convenient usually to remove the peat-like product when the mean weight of worms begins to decline, although the appearance of the peat-like product is also a good guide for judging the desired point at which to remove it.

The temperature for growing worms in the process is within the 15-30⁰C range, most preferably from 18-25°C. Some species of worms prefer or will tolerate higher or lower temperatures.

The quality of the product depends on how well the particular species of earthworms used obtain nutrition from micro-organisms growing on the decaying wastes. Examples of particularly suitable worms are Eisenia foetida and Dendrobaena veneta. Whereas E. foetida, the tiger or brandling worm, is a common inhabitant of compost heaps and is reared commercially for fishbait, Dendrobaena veneta is a rare species in the U.K. Other species, of tropical origin, which also give good results are Perionyx excavatus, Eudrilus eugeniae and Peretima spp. Lumbricus species generally perform the least well. While the invention is described hereinafter with particular reference to Eisenia foetida it will be understood that many other species will give good results, if necessary with some adaptation of the preferred conditions described for E. foetida. The limited conditions have been shown to differ little for D. veneta, and the main difference for P. excavatus and E eugeniae has been shown to be an optimum temperature range 1-5°C higher than for E. foetida.

E. eugeniae grows and reproduces faster than E. foetida and also processes organic matter faster. Its nutrient value does not differ significantly from that of E. foetida.

Optimum moisture in the waste (by weight) for E. foetida was 80-90% moisture, for Perionyx excavatus 75-90%, for Eudrilus eugeniae 70-80% and for Dendrobaena veneta 70―80%.

E. foetida is an ideal food for farm animals such as pigs and poultry, is particularly useful in fish farming especially for young eels, and has been found useful in dog food, for aquarium fishes and for rearing bull-frogs in commercial frogs-legs production. E foetida contains 60-70% of protein (by weight of dry matter). It has a better amino acid spectrum than meat meal of fish meal and is rich in lysine, methionine and cysteine (Table 2). It has large quantities of long chain fatty acids that non-ruminant animals cannot synthesize, a good mineral content, 2-3% (on the same basis as for protein), and many useful vitamins particularly niacin and vitamin B₁₂. When assessed for animal nutritive value on a computer programme it was found to have a greater monetary value than fish meal, meat meal or soya bean meal.

' The above-described wastes provide an acceptable habitat and food source for earthworms, especially the species described above, and need no preparation or modification (with the occasional exception of several days turning and composting). The typical moisture content of about 78% by weight is almost identical with that of E. foetida, so that the worm is under no osmotic stress.

E. foetida is believed to obtain most of its nutrition from microorganisms that grow on organic wastes. These are mainly bacteria but also include fungi and protozoa and possibly nematodes. Coincidentally, the worm fragments the waste with the aid of a grinding gizzard as the material passes through its intestine. This increases the surface area of the waste and further microbial inoculation occurs so that the worm faeces contain considerably more microorganisms than the ingested waste. The worm multiplies the microorganisms faster than they would multiply on their own. In this way, the worm and microorganisms interact with each other to break down the waste progressively.

Experiments showed that worms increased the numbers of gram-negative bacteria from 8.5x10⁶ organisms g⁻¹ in unworked waste to more than 65x10⁶ organisms g-¹ in waste with worms. Numbers of coliform bacteria also increased. Changes during passage through the gut seem to involve increases in numbers of microorganisms without much change in species diversity. During this process the mineral content and form changes.

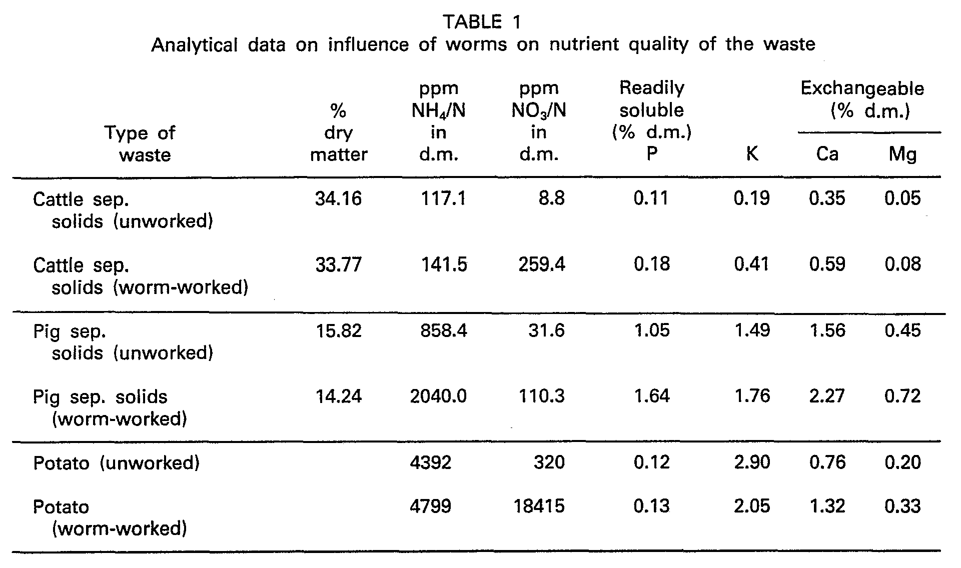

Although the total nitrogen content did not change much, the quantity of nitrogen in the nitrate form more readily available to plants was changed drastically.

A requirement of the earthworm is that the waste in which it lives is aerobic. This precludes treating the waste in depths of much greater than 40 cm. However, once the worms have processed such a depth of waste, further layers of waste can be added progressively to a depth of 1 m or more. The worms will move gradually to reach the fresh layers, processing the intervening material as they go.

The method of the invention could be performed batchwise, e.g. in boxes, crates or other containers which could be stacked on shelves, racks or even free-standing one upon another. Very conveniently boxes approximately 2mx1m and any depth up to 1 m are used. Alternatively, production could be in beds on the floor with bottom drainage but with a fine mesh base to prevent loss of worms. In either method it is preferable to keep a covering over the box or bed to minimize loss of water. Most worms grow best at a temperature of from 15-25°C and in colder climates some form of heating to a relative constant temperature may be necessary in winter.

The time the worms take to process the waste can be manipulated by the weight and age of the worms added to the waste. Cocoons containing worm eggs (3 to 5 per cocoon is typical) can be used to inoculate the separated solids. However, such a process will be slow since about 3 weeks are needed for the cocoons to hatch and 7-8 weeks for the worms to reach sexual maturity and begin a new generation.

If the main aim is merely to process the waste, the number of worms added is only of importance in assessing the time necessary for the process to be completed. The size of worm is not of great importance, a large number of small worms being equally effective as the same biomass of large worms. In such a case, a mix of processed waste containing cocoons and small to medium-sized worms can be quite satisfactory. However, to obtain maximum harvestable worm tissue for animal feed purposes it is best to inoculate the solids with at least half grown worms because the rate of increase of weight of such worms with time is approximately exponential. That is, half-grown worms double in size far more rapidly than babies.

It is possible to calculate the stocking rates for specific times of breakdown of the waste from graphs calculated from laboratory data in small-scale containers. Table 2 below gives data for E. foetida, separated cattle solids and potato waste. In general, the stocking rate is best kept at between 1:50 and 1:30 expressed as a weight of worms to wet weight of the waste. A rate of 1: more than 50 on this basis, equivalent roughly to the x16 rate used in the Examples hereinafter, would probably be inadequate from an economic viewpoint, while a rate as high as 1:25 appears to be too high to support a thriving worm population.

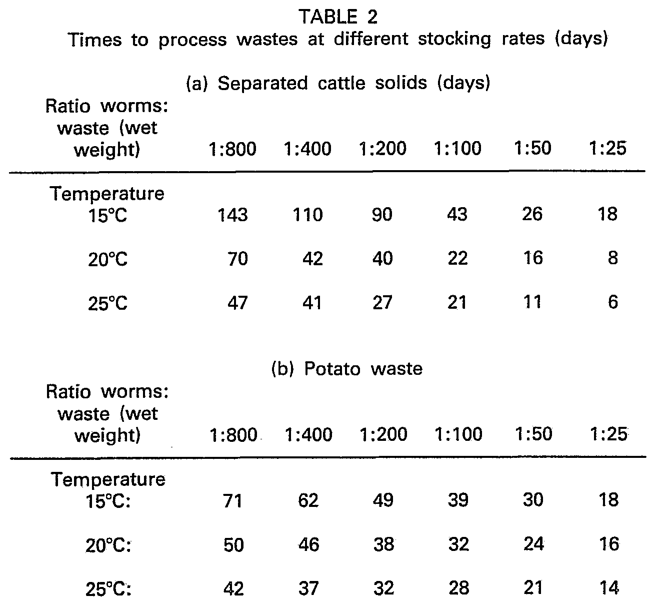

From larger-scale breeding studies in both kinds of waste these figures appear conservative and breakdown of the waste could be even more rapid in practice when done on a larger scale. Probably, the most convenient would be to do the processing at 20°C giving a breakdown time of 2-3 weeks.

In practical terms, there are several ways of inoculating worms. If containers were large, some worked waste could be left at the bottom of the containers and freshly separated animal waste solids added. The worms will remain in the bottom-worked waste until the fresh material becomes acceptable.

The following Examples illustrate the invention. Although the experiments reported are on a small scale, larger scale work has been carried out successfully in boxes 0.5 mxO.5 m and larger beds, 3 mx5 m.

### Example 1

The growth of E. foetida in a separated cattle solids waste, at different stocking rates of worms and different temperatures, was investigated in crystallizing dishes. Into each dish 40 g (wet weight) of the waste was placed and either one, two, four, eight or sixteen worms were inoculated with two replicates for each stocking level. The worms inoculated were hatchlings weighing approximately 0.05 g each. Similar batches of dishes were kept at 15, 20, 25 and 30°C. At regular intervals, the dishes were emptied out and the worms washed and weighed. If the worms were dead then an equivalent number of similar-sized live worms was added to maintain the stocking rate. Such deaths were rare except at the highest temperature. The experiment continued until all the worms began to lose weight indicating that the nutritional value of the waste was beginning to decrease.

The main results of this experiment can be summarized as follows; individual worms showed a greater increase in weight the lower the stocking rate. However, the overall productivity, in terms of total weight of worms in the whole waste increased with the stocking rate, being greatest at the highest stocking rates. Even higher stocking rates are possible.

### (a) Effect of temperature

When the growth of worms at the maximum stocking rate of 16 worms in 40 g separated cattle solids was compared at 15°, 20°, 25° and 30° it was clear that the ambient temperature affected the rate of growth of worms considerably. Growth was greatest at 20°C and 25°C, with little difference between the two temperatures. At 15°C it was very much slower and although it was slightly faster at 30°C many worms died. There would seem to be practical difficulties in growing worms at temperatures above 25°C, although there was good evidence that worms could be conditioned to temperatures at least 5°C above their normal preference.

### (b) Time to reach maturity and reproduction

E. foetida took 46 days to reach maturity at 25°C, 55 days at 20°C and 69 days at 15°C; this is a little shorter than on vegetable wastes such as potato waste. Cocoons were produced prolifically particularly at the higher stocking rates. E. foetida can produce up to 20 young per week but the overall productivity was dependent upon a number of factors. At higher temperatures more cocoons were produced and the incubation time was less but percentage hatch was also less and so were the numbers of hatchlings emerging (Table 3).

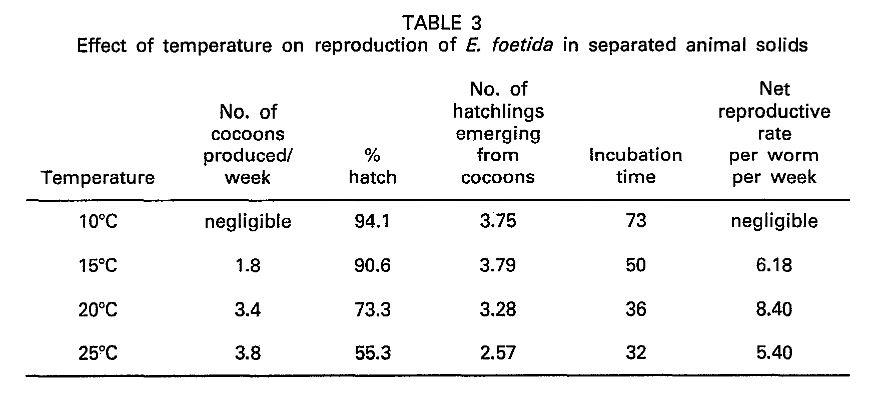

### (c) Conversion ratios

From the stocking rate experiment it was possible to calculate basic conversion rates of waste to earthworm protein. These could be made on the basis of dry weight of waste and worms or, since the moisture contents or worm and waste are almost identical, on the wet weights. The maximum conversion ratios were all obtained at the highest stocking rate (x16) and were as follows (Table 4)

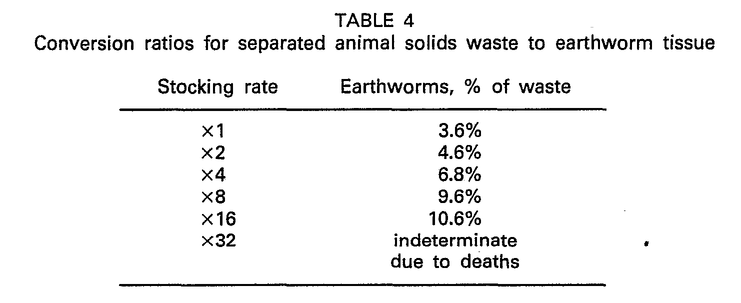

Larger scale culture of the waste produces comparatively higher conversion ratios.

### (d) Addition of liquids

The liquid fraction can be added to the separated solids in small quantities. Preliminary experiments using crystallizing dishes showed that up to 35% of the liquid fraction could be added back to the solids in 5 aliquots at intervals of one week. In a draining system all of the liquid fraction can be added in this way. This was subsequently tried on a field scale with pig waste, which, it will be recalled, contains more liquid fraction than cattle waste. 10 litres of pig waste liquid was successfully added to 100 kg of the separated solids (surface area 1 m²) daily, giving a product of good quality.

### (e) Product

The quality of the product (which improves with scaling up) must be seen to be believed and has had an excellent reception by horticulturalists. It is described as having a peat-like appearance but this does scant justice to its beautiful tilth and moisture-holding capacity. In no way is this 'clean' virtually non-odorous product to be confused with the typically 'dirty' malodorous and matted product obtained from domestic composting. To give some idea of the tilth obtained it can be calculated that at the maximum stocking rate of x16 the number of worms per Kg of waste is about 300, each passing several times its own weight (0.6-1.0 mg) through its body per day.

### (f) Plant growth trials

Extensive plant growth trials have been made using the product. It proved exceptionally good for growing lettuce for transplanting and compared favourably with peat. For peas, tomatoes, cucumbers, lettuce, cabbage and radish germination of seeds was 2-3 days faster than in a recommended John Innes potting compost. With peas, growth was consistently best in the neat worm-worked separated solids, intermediate in a 50:50 v/v mixture of worm-worked solids and potting compost and least in potting compost. All the other crops grew best in a 50:50 v/v mixture of worm-worked separated solids and potting compost, growth of all crops considerably exceeding that in potting compost alone.

### Example 2

The growth of E. foetida in a potato solids waste at different stocking rates of worms and different temperatures was investigated as described in Example 1.

The main results of this experiment can be summarized in exactly the same way as in Example 1.

### (a) Effect of temperature

When the growth of worms at the maximum stocking rate of 16 worms in 40 g of waste was compared at 15°, 20°, 25° and 30°C, it was clear that the ambient temperature had a considerable effect on the rate of growth of the worms. Individual worms put on weight much more rapidly at 20°C than at 15°C and there was a small further increase in rate of weight gain at 25°C. However, at 30°C there was considerable mortality; moreover the rate of increase in weight was less than at 25°C. It would seem to be more difficult to grow E. foetida worms in potato waste at temperatures higher than 25°C. There was only a relatively small increase in rate of growth from 20°C to 25°C, and in view of the cost of maintaining growing systems at the higher temperature, it seems that the optimum temperature should be about 20°C.

### -(b) Time to reach maturity

E foetida took 61 days to reach maturity at 25°C, 65 days at 20°C and 74 days at 15°C; this is a little longer than on most animal wastes. Cocoon production was not monitored in detail, but seemed very prolific. From studies on other wastes, E. foetida has been found to be capable of producing about 20 young per week, which gives it a very considerable potential for increase and rapid colonization of new waste.

### (c) Conversion ratios

From the stocking rate experiment it was possible to calculate basic conversion rates of waste to earthworm protein. These could be made on the basis of dry weights of waste and worms or, since the moisture contents of worm and waste are almost identical, on the wet weights. The maximum conversion ratios were all obtained at the highest stocking rate (x16) and were as follows (Table 5).

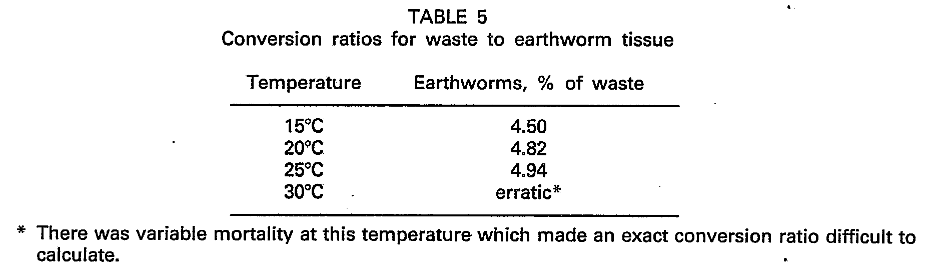

Larger scale culture of the waste often produces comparatively higher conversion ratios. Moreover, manipulation of the wastes by additives such as straw or wood shavings or by microbial inoculation can increase the productivity of wastes and hence the conversion ratios.

### (d) Product

As in Example 1, the quality of the product (which improves with scaling up) must be seen to be believed. It has a peat-like appearance, a fine tilth, and is a "clean", virtually non-odorous product. Again, it must not be confused with the typically "dirty", malodorous and matted product obtained from domestic composting. Again, it can be calculated that at the maximum stocking rate of x 16, the number of worms generated in the waste reaches about 300 per Kg of waste.

### Example 3

Four individual worms weighing 0.05 g were placed in 200 g of cattle separated solids (80% moisture content) and this was replaced every week. Each worm was weighed weekly. Numbers of cocoons and hatchlings produced weekly were counted and removed. Two replicates of each of the four species E. eugeniae, P. excavatus, E. foetida and D. veneta were set up and productivity followed for 20 weeks. The average rates of growth of the four species, reproduction data and overall productivity in terms of biomass production are shown in Table 6.

Clearly E. eugeniae showed a much greater productivity than any other species with little difference between P. excavatus and E. foetida. P. excavatus, was rather hardier and easier to harvest than E. foetida.

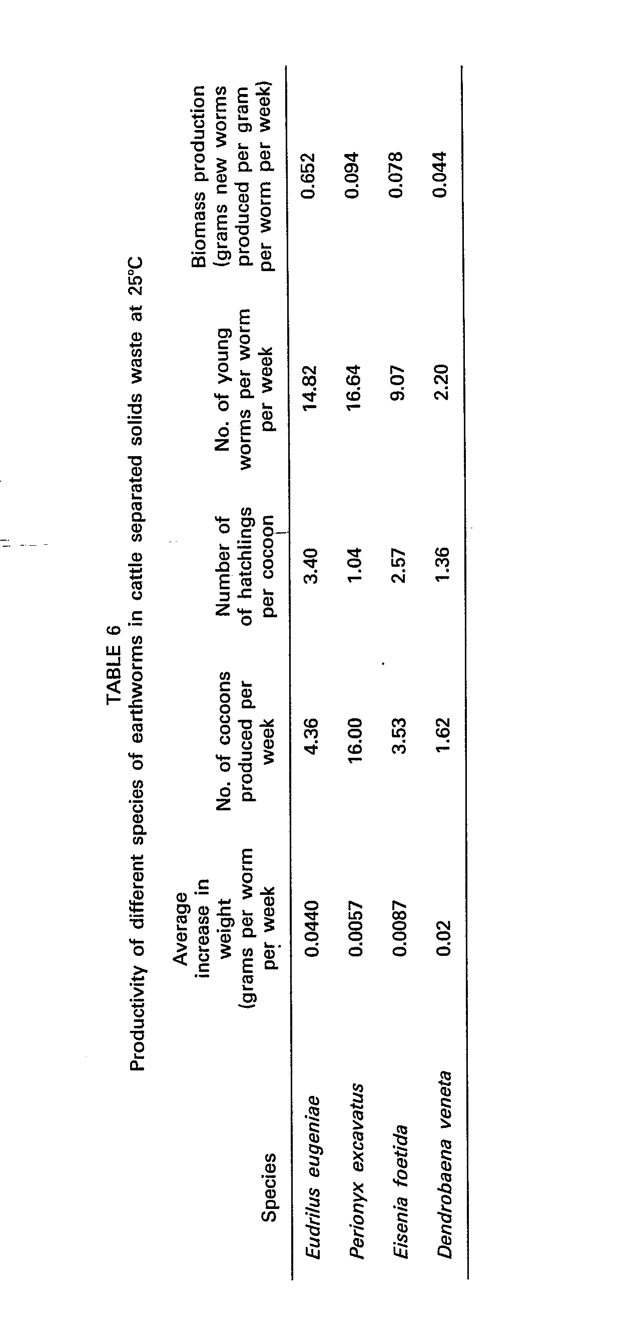

## Claims

1. A process of decomposing a waste consisting of, or including a major proportion of, separated animal waste solids or of vegetable peelings waste solids, the separated animal waste solids being obtained by separation of a solids fraction from animal waste slurry, the waste to be decomposed having a pH of between 5 and 9, any ammonia content less than 0.5 mg/g and a water content from 65 to 90% by weight which process comprises introducing earthworms or earthworm cocoons into the waste and allowing the worms to mature and breed therein at a temperature of from 15 to 30°C and break down the waste into a product of peat-like appearance.

2. A process according to Claim 1, wherein separated animal waste solids are utilized and liquid fraction of an animal waste from which a solids fraction has been separated is added back progressively to the separated solids during the process.

3. A process according to Claim 1 or 2, wherein separated cattle or pig waste solids are utilized.

4. A process according to Claim 3, wherein the cattle or pig waste solids have a water content of 78 to 82% by weight.

5. A process according to Claim 1, wherein potato peelings waste solids are utilized.

6. A process according to Claim 5, wherein the potato peelings waste solids have a water content of 75 to 79% by weight.

7. A process according to any preceding claim, wherein the earthworms comprise those of any one or more of the species Eudrilus eugeniae, Eisenia foetida, Perionyx excavatus and Dendrobaena veneta.

8. A process according to any preceding claim carried out at a temperature of from 18 to 25°C.

9. A process according to any preceding claim, wherein the stocking rate of weight of worms to wet weight of waste is from 1:50 to 1:30.

10. A process according to any preceding claim, wherein most or substantially all of the worms are separated from the peat-like material, killed, and processed for use as a feedstuff.

## Patentansprüche

1. Verfahren zur Zersetzung eines Abfalles, bestehend aus oder umfassend einen Hauptteil von abgetrennten, tierischen Abfallfeststoffen oder Gemüseschalenabfallfeststoffen, wobei die abgetrennten tierischen Abfallfeststoffe erhalten werden durch Abtrennen einer Feststoffraktion aus einer Aufschlämmung von tierischem Abfall und der zu zersetzende Abfall ein pH von zwischen 5 und 9, einen Ammoniakgehalt von weniger als 0,5 mg/g und einen Wassergehalt von 65 bis 90 Gew.-% aufweist, dadurch gekennzeichnet, daß man Regenwürmer oder Regenwurmkokons in den Abfall einführt und die Würmer darin bei einer Temperatur von 15 bis 30°C reifen und brüten und den Abfall zu einem Produkt von torfähnlichem Aussehen zerkleinern läßt.

2. Verfahren nach Anspruch 1, dadurch gekennzeichnet, daß abgetrennte tierische Abfallfeststoffe eingesetzt werden und die flüssige Fraktion eines tierischen Abfalles, von welcher eine Feststoffraktion abgetrennt wurde, nach und nach zu den abgetrennten Feststoffen während des Verfahrens zurückgegeben wird.

3. Verfahren nach Anspruch 1 oder 2, dadurch gekennzeichnet, daß abgetrennte Rinder- oder Schweineabfallfeststoffe verwendet werden.

4. Verfahren nach Anspruch 3, dadurch gekennzeichnet, daß die Rinder- oder Schweineabfallfeststoffe einen Wassergehalt von 78 bis 82 Gew.-% haben.

5. Verfahren nach Anspruch 1, dadurch gekennzeichnet, daß Kartoffelschalenabfallfeststoffe eingesetzt werden.

6. Verfahren nach Anspruch 5, dadurch gekennzeichnet, daß die Kartoffelschalenabfallfeststoffe einen Wassergehalt von 75 bis 79 Gew.-% aufweisen.

7. Verfahren nach einem der vorhergehenden Ansprüche, dadurch gekennzeichnet, daß die Regenwürmer diejenigen von einer oder mehreren der Gattungen Eudrilus eugeniae, Eisenia foetida, Perionyx excavatus und Dendrobaena veneta umfassen.

8. Verfahren nach einem der vorhergehenden Ansprüche, dadurch gekennzeichnet, daß es bei einer Temperatur von 18 bis 25°C durchgeführt wird.

9. Verfahren nach einem der vorhergehenden Ansprüche, dadurch gekennzeichnet, daß das Vorratsverhältnis an Gewicht von Würmen zum Naßgewicht an Abfall 1:50 bis 1:30 beträgt.

10. Verfahren nach einem der vorhergehenden Ansprüche, dadurch gekennzeichnet, daß die meisten oder praktisch alle der Würmer von dem torfähnlichen Material abgetrennt, getötet und zur Verwendung als Futtermittel verarbeitet werden.

## Revendications

1. Procédé pour décomposer des déchets consistant en, ou comprenant une proportion majeure de, déchets solides provenant d'animaux et séparés ou de déchets solides constitués par des pelures de légumes, les déchets solides provenant d'animaux et séparés étant obtenus par séparation d'une fraction de solides à partir d'une suspension de déchets d'animaux, les déchets à décomposer ayant un pH compris entre 5 et 9, une teneur éventuelle en ammoniac inférieure à 0,5 mg/g et une teneur en eau de 65 à 90% en poids, ce procédé comprenant l'introduction de vers de terre ou de cocons de vers de terre dans les déchets et le fait de laisser les vers mûrir et se développer dans les déchets à une température de 15 à 30°C et décomposer les déchets en un produit ayant un aspect analogue à celui de la tourbe.

2. Procédé selon la revendication 1, dans lequel on utilise les déchets solides de provenance animale et séparés et l'on rajoute à nouveau progressivement, aux solides séparés au cours du processus, la fraction liquide de déchets animaux dont une fraction de solides a été séparée.

3. Procédé selon la revendication 1 ou 2, dans lequel on utilise des déchets solides provenant du bétail ou de porcs et qui ont été séparés.

4. Procédé selon la revendication 3, dans lequel les déchets solides provenant du bétail ou de porcs ont une teneur en eau de 78 à 82% en poids.

5. Procédé selon la revendication 1, dans lequel on utilise des déchets solides formés par des pelures de pommes de terre.

6. Procédé selon la revendication 5, dans lequel les déchets solides formés par les pelures de pommes de terre ont une teneur en eau de 75 à 79% en poids.

7. Procédé selon l'une quelconque des revendications précédentes, dans lequel les vers de terre comprennent l'une quelconque ou plusieurs des espèces Eudrilus eugeniae, Eisenia foetida, Perionyx excavatus et Dendrobaena veneta.

8. Procédé selon l'une quelconque des revendications précédentes, effectué à une température de 18 à 25°C.

9. Procédé selon l'une quelconque des revendications précédentes, dans lequel le taux de stockage en poids de vers par rapport au poids humide des déchets, est compris entre 1:50 et 1:30.

10. Procédé selon l'une quelconque des revendications précédentes, dans lequel la plupart ou la quasi-totalité des vers sont séparés de la matière analogue à la tourbe, sont tués et traités pour servir de matières nutritives.
